# EUROPÄISCHE PATENTSCHRIFT

(11) **EP 0 959 661 B1**
(45) Veröffentlichungstag und Bekanntmachung des Hinweises auf die Patenterteilung: **12.06.2002**
(21) Anmeldenummer: 97906983.8
(22) Anmeldetag: 08.01.1997
(51) Int. Cl.: A01D 85/00, A01F 15/08

(54) **VERFAHREN ZUR AUSGABE VON HALMGUTBALLEN UND VORRICHTUNG ZUR DURCHFÜHRUNG DES VERFAHRENS**
PROCESS FOR PRODUCING STRAW BALES AND DEVICE FOR IMPLEMENTING IT
PROCEDE POUR PRODUIRE DES BALLES DE PAILLE ET DISPOSITIF PERMETTANT DE METTRE LEDIT PROCEDE EN OEUVRE

(30) Priorität: 08.01.1996 DE 19600325
(43) Veröffentlichungstag der Anmeldung: 01.12.1999
(73) Patentinhaber: Wisskirchen, Markus, 51519 Odenthal (DE)
(72) Erfinder: Wisskirchen, Markus, 51519 Odenthal (DE)
(74) Vertreter: Patentanwälte Lippert, Stachow, Schmidt & Partner
(86) Internationale Anmeldenummer: DE9700010
(87) Internationale Veröffentlichungsnummer: WO9724920

(56) Entgegenhaltungen:
- EP-A- 0 631 715
- DE-A- 2 455 564
- DE-A- 3 804 347

## Beschreibung

Die Erfindung betrifft ein Verfahren zur Ausgabe von Halmgutballen nach dem Oberbegriff des Anspruches 1 und eine Vorrichtung zur Durchführung des Verfahrens nach dem Oberbegriff des Anspruches 7.

Aus der deutschen Offenlegungsschrift 38 04 347 A1 ist es bekannt, daß bei Erntearbeiten von Getreide das Getreide von einer fahrenden Strohberge- und/oder konservierungsmaschine, insbesondere einer Strohpresse, aufgenommen und/oder gedroschen wird. Das ausgedroschene Stroh wird als Halmgut nach einem Zuschnitt unter sehr hohem Druck zu Ballen gepreßt. Dabei werden diese über entsprechende Haltemittel, wie beispielsweise Mähbinderstrick, in der durch die Pressung erzielten Form gehalten.

Diese geformten Strohballen werden anschließend ausgestoßen und anschließend vor dem Ablegen auf dem Feld in eine Zwischenspeicherposition geschoben. Dabei bewegt sich die Zwischenspeicherposition mit gleicher Fahrt. Der erste Halmgutballen wird in der Zwischenspeicherposition auf eine Höhe gehoben, die größer ist als die Höhe eines nachfolgenden zweiten Halmgutballens. Der zweite Halmgutballen wird ausgestoßen und die Zwischenspeicherposition gebracht. Dabei wird der erste Halmgutballen während des Ausstoßens in seiner angehobenen Zwischenposition gehalten. Nach Erreichen der Zwischenspeicherposition des zweiten Halmgutballens wird der erste Halmgutballen von seiner angehobenen Zwischenposition abgesenkt und auf den zweiten Halmgutballen nahezu deckungsgleich abgelegt. Anschließend wird der Halmgutstapel, bestehend aus dem zweiten Halmgutballen mit dem daraufliegenden ersten Halmgutballen zur Ablage auf dem Feld ausgestoßen.

In einem nachfolgenden Arbeitsgang werden diese abgelegten Strohballenstapel mit einem Bergefahrzeug angefahren und aufgesammelt. Dabei werden entsprechende Greifwerkzeuge eingesetzt, die zum Strohballenstapel positioniert werden und diesen auf einen Transportwagen heben und dort abgelegen.

Nachteilig ist dabei, daß das Schieben der Halmgutballen von der Ballenpresse selbst vorgenommen werden muß, wodurch eine sehr enge Ankopplung an die Halmgutberge- und konserviermaschine erfolgen muß. Außerdem werden die Halmgutballen nicht auf ihre Länge hin kontrolliert, so daß der Stapel bei einer zu geringen Länge des unteren Halmgutballen kippt. Schließlich ist bei Einrichtungen der dargestellten Art eine Stapelung von höchstens zwei Halmgutballen möglich, wodurch nur eine geringe Produktivität erreichbar ist.

Weiterhin ist es allgemein bekannt, anderes Halmgut, beispielsweise Heu, zu Rollen zu formen, die den beschriebenen Strohballen entsprechende Halmgutballen darstellen. Diese Halmgutballen werden mittels Folien konserviert und in Form gehalten und in gleicher Weise wie die als Strohballen ausgeführten Halmgutballen auf dem Feld abgelegt, woraus sich die gleichen Nachteile ergeben.

Außerdem ist bei einer längeren Zeitspanne zwischen dem Ablegen und dem Bergen jeder Halmgutballen der Witterung ausgesetzt, worunter die Qualität des Halmguts, auch bei einer erfolgten Konservierung leiden kann.

Eine Vergrößerung der Halmgutballen, mit der eine Verringerung des Bergungsaufwandes zu erreichen wäre, ist kaum möglich, da die zu bewältigenden Massen eine Vergrößerung und damit eine Verteuerung der Halmgutberge- oder konservierungsmaschinen mit sich bringen würden.

Der Erfindung liegt deshalb die Aufgabe zugrunde, den Aufwand der Bergung von Halmgutballen ohne eine notwendige Veränderung der Halmgutberge- oder Konservierungsmaschinen zu verringern.

Verfahrensseitig wird die Aufgabe dadurch gelöst, daß bei Bewegung eines Halmgutballens in Richtung zu der Zwischenspeicherposition, die durch einen Anfang und ein Ende gekennzeichnet ist, welche einen Abstand zueinander aufweisen, der der normalen Länge eines Halmgutballens entspricht, ein Näherungssignal erzeugt wird, welches positionsspezifische Werte aufweist. An dem Anfang der Zwischenspeicherposition wird ein Ballensignal erzeugt. In dem Falle, daß das Näherungssignal einen ersten Wert aufweist, der einen großen Abstand des Ballenanfanges von dem Ende der Zwischenspeicherposition repräsentiert, und danach das Ballensignal einen EIN-Zustand zeigt, wird ein zusätzlicher Vorgang zum Schieben des Halmgutballens eingeleitet, der dann beendet wird, wenn das Näherungssignal einen zweiten Wert aufweist und das Ballensignal in den AUS-Zustand geht. Schließlich wird nach ordnungsgemäßer Beendigung des Schiebevorganges der Hebevorgang eingeleitet.

Durch das Zusammenwirken von Näherungssignal und Ballensignal wird die zu stapelnde Ballen- auf seine Länge geprüft. Ist diese in Ordnung, wird der Schiebevorgang beendet und der Hebevorgang eingeleitet. In der Praxis kommt es vor, daß in Halmgutberge- oder konservierungsmaschinen mitunter Fehler derart auftreten, daß die Halmgutballen nicht die vorgesehene Größe aufweisen, d.h. entweder zu klein oder zu groß sind. Diese dürfen auf keinen Fall gestapelt werden, da einerseits ein Stapel, der einen derartigen fehlerhaften Ballen enthält, in sich keinen Halt hätte. Andererseits kann das Stapeln fehlerhafter Ballen zur Beschädigung der Stapelvorrichtung führen.

Durch den zusätzlichen Schiebevorgang tritt eine weitgehende Entkopplung von der Halmgutberge- oder Konservierungsmaschine ein, die anderenfalls auch die Aufgabe hätte, die Halmgutballen in die Zwischenspeicherpositon zu schieben. Durch dieses Entkoppeln wird das Stapeln ermöglicht, da in aller Regel der nachfolgende Ballen stets kontinuierlich weitergeschoben wird und der Stapelvorgang eine gewisse Zeit in Anspruch nimmt. Durch den Schiebevorgang wird ein Abstand des zu stapelnden Ballens von dem nachfolgenden Ballen, d.h. ein gewisser Vorsprung gesichert, der einen störungsfreien Stapelvorgang gewährleistet.

Besonders günstig ist es, mehr als zwei Halmgutballen übereinander zu stapeln. Hier hat es sich in der Praxis als günstig erwiesen, bis zu vier Stück übereinander zu stapeln. Der Stohballenstapel aus mehr als zwei Halmgutballen wird dadurch gebildet, daß das Verfahren anstelle des ersten Halmgutballens mit dem Halmgutballenstapel wiederholt wird, wobei anstelle des zweiten Halmgutballens weitere Halmgutballen treten.

Sobald also der erste Halmgutballen auf dem zweiten Halmgutballen abgelegt ist, wird der dadurch entstandene Halmgutballenstapel angehoben und dann wenn der dritte Halmgutballen in der Zwischenspeicherposition liegt, der Halmgutballenstapel auf dem dritten Halmgutballen abgelegt. Dies wird so lange wiederholt, bis die gewünschte Anzahl von Halmgutballen, zweckmäßigerweise also bis vier Halmgutballen gestapelt sind. Hierbei ist es günstig, die Anzahl der Halmgutballen einstellbar zu gestalten, da somit das Verfahren den jeweiligen Bedingungen besser angepaßt werden kann. So kann es beispielsweise bei einem sehr unebenen bergigen Gelände zweckmäßig sein, nur eine geringere Anzahl von Halmgutballen übereinander zu legen. Insbesondere ist jedoch eine Einstellung der Ballenzahl für die Anpassung an Bergefahrzeuge zweckdienlich. Wenn beispielsweise eine Halmgutberge- oder konservierungsmaschine zusammen mit einem kleinen Traktor eingesetzt wird, was in der Praxis sehr häufig vorkommt, kann eine Einstellung einer Stapelgröße von zwei bis drei Ballen sehr zweckmäßig sein.

Besonders günstig ist es, das Ausstoßen des Halmgutballenstapels in der Zwischenspeicherposition zur Ablage auf dem Feld durch eine weitere zusätzliche Schiebebewegung zu realisieren.

Dies kann der Entlastung der Maschine dienen.

In einer Ausgestaltung erfolgt die Steurung des Schiebevorganges dadurch, daß bei einem EIN-Zustand des ersten und des zweiten Näherungssignales der Vorgang zum Schieben des Halmgutballens durchgeführt wird, bis das zweite Näherungssignal den AUS-Zustand einnimmt.

In einer weiteren Ausgestaltung des erfindungsgemäßen Verfahrens ist vorgesehen, daß ein der Größe des Halmgutballenstapels entsprechendes Endsignal erzeugt wird und daß im Falle des EIN-Zustandes des Endsignales ein weiterer Hebevorgang gesperrt wird, bis der Halmgutballenstapel aus der Zwischenspeicherposition entfernt wird.

Hierdurch wird eine Steuerung der Stapelgröße erreicht. Bei der günstigen Möglichkeit der Einstellung der Stapelgröße kann die Erzeugung des Endsignales in Abhängigkeit von der Anzahl der gestapelten Halmgutballen erzeugt werden.

Die erfindungsgemäße Aufgabenstellung wird auch durch eine Vorrichtung zur Ausgabe von Halmgutballen gelöst die Hebemittel, die im wesentlichen senkrecht bewegbar sind, aufweist. Bei dieser Vorrichtung ist eine Schubvorrichtung für die Halmgutballen vorgesehen. Weiterhin sind den Anfang und das Ende der Zwischenspeicherposition kennzeichnende Sensoren angeordnet, die mit einer Steuereinrichtung zur Steuerung der Hebemittel und der Schubvorrichtung in Wirkungsverbindung stehen.

In einer besonders günstigen Ausgestaltung der Erfindung ist die Schubvorrichtung unter der Gleitfläche angeordnet und weist einen bis über die Höhe der Gleitfläche nach oben schwenkbaren Förderzinken auf, der in Ausstoßrichtung längsbeweglich ist.

Durch diese Schubvorrichtung wird die Bewegung des Halmgutballens auf der Gleitfläche unterstützt, so daß ein störungsfreies Gleiten und ein störungsfreies Stapeln bei kontinuierlich weiterlaufender Halmgutberge- oder konservierungsmaschine ermöglicht wird.

Zweckmäßigerweise ist bei der Schubvorrichtung eine in Ausstoßrichtung verlaufende Gleitschiene vorgesehen, auf der ein Zinkenschlitten längsbeweglich ist. An diesem Zinkenschlitten ist ein Schwenkhebel über ein Gelenk schwenkbar angeordnet, wobei die Schwenkachse senkrecht zur Richtung der Längsbewegung des Förderzinkens verläuft. Der Förderzinken ist über ein Distanzstück mit einem Abstand zu dem Schwenkhebel an der in Richtung der Längsbewegung hinteren Seite des Schwenkhebels befestigt. Zum Antrieb der Schubvorrichtung ist an einem Ende eines Hebelarmes des Schwenkhebels ein in Richtung der Längsbewegung des Förderzinkens längsbeweglicher Linearantrieb angelenkt.

In einer bevorzugten Ausgestaltung der Schubvorrichtung ist vorgesehen, daß der Zinkenschlitten mindestens einen in der Gleitschiene eingreifenden Führungsstift aufweist und der Zinkenschlitten aus mindestens einem Schwenkhebel besteht, wobei der Führungsstift das Gelenk des Schwenkhebels derart darstellt, daß die Schwenkachse mit der Mittelachse des Führungsstiftes zusammenfällt. Diese Ausführungsform zeigt einen sehr einfachen aber wirkungsvollen und wenig störanfälligen Aufbau.

Beim Schieben eines Halmgutballens auf die Gleitfläche greift der Linearantrieb an dem Zinkenschlitten an und schiebt diesen in Ausstoßrichtung weiter. Durch den Angriff der Druckkraft an den Schwenkhebel wird dieser infolge der Hebelwirkung geschwenkt. Da der Zinken über das Distanzstück an dem Schwenkhebel mit einem Abstand befestigt ist, wird der Zinken nach oben geschwenkt, wodurch er in den Halmgutballen eingreift und eine Schubkraft auf den Halmgutballen aufgebracht werden kann.

In einer günstigen Ausgestaltung ist vorgesehen, daß der Linearantrieb aus einer hydraulischen Druck- und Zugvorrichtung besteht, die an einem Befestigungspunkt in Richtung zur Ballenpresse widergelagert ist. Mit dieser Druck- und Zugvorrichtung wird beim Schieben eines Halmgutballens auf die Gleitfläche der Schlitten die Druckvorrichtung und beim Zurückfahren des Zinkenschlittens die Zugvorrichtung zum Tragen kommen.

Der Ballenstapelwagen weist eine Zugöse zur Verbindung mit der Halmgutsammel- oder konservierungsmaschine auf. Er ist derart zweirädrig ausgebildet, daß die Räder in Radgabeln geführt, die beiderseits der Gleitfläche angelenkt und drehbar gelagert und arretierbar sind. Die Zugöse befindet sich in einem Abstand zu einer gedachten Mittellängslinie des Ballenstapelwagens. In dem gleichen Abstand zu dieser Mittellängslinie ist auf deren anderen Seite eine abnehmbare Lenkstange zur weiteren Verbindung des Ballenstapelwagens mit der Halmgutberge- oder konservierungsmaschine befestigbar. Auf diese Art ist der Stapelwagen an die Halmgutberge- oder konservierungsmaschine starr gekoppelt.

Durch diese starre Kopplung wird verhindert, daß bei einer Kurvenfahrt kein Strohballen, der sich im Übergangsbereich zwischen der Maschine und dem Ballenstapelwagen befindet, abgeknickt wird.

Anderenfalls müßte der Ballenstapelwagen weiter von dem Ende der Halmgutberge- oder konservierungsmaschine entfernt sein, was die Wendigkeit des gesamten Gespanns negativ beeinträchtigen würde.

Die Räder müssen bei einer derart starren Kopplung drehbar gelagert sein. Für eine Straßenfahrt wird sodann die Lenkstange entfernt und die Räder hinsichtlich ihrer Drehbarkeit arretiert, so daß der Ballenstapelwagen wie ein gewöhnlicher Anhänger nachläuft.

In einer bevorzugten Ausführung der erfindungsgemäßen Vorrichtung ist vorgesehen, daß der Ballenstapelwagen am Anfang und am Ende der Zwischenspeicherposition beiderseits der Gleitfläche nach oben gerichtete Säulen aufweist, wobei die Säulen auf je einer Seite über Quertraversen miteinander verbunden sind. Das Hebemittel ist derart ausgebildet, daß zwischen den Säulen je eine Hauptführungssäule angeordnet ist, in denen beiderseits der Gleitfläche längsverlaufende Hebetraversen senkrecht beweglich geführt sind. Dabei sind an den Säulen Führungsschienen zur seitlichen Führung der Hebetraverse vorgesehen. An den Hebetraversen wiederum sind Hebeteller angeordnet, die nach oben in eine senkrechte Stellung schwenkbar sind und federbelastet in waagerechter Stellung gehalten werden. In der Draufsicht ragen diese Hebeteller in die Gleitfläche im Bereich der Zwischenspeicherposition. Die Hebeteller sind zumindest von der Höhe der Gleitfläche bis zu einer Höhe die größer als die Höhe der Halmgutballen ist, bewegbar.

Die Hauptführungssäule kann beispielsweise aus einem Rechteckrohr bestehen, über dem ein zweites Rechteckrohr, an dem die Hebetraversen befestigt sind, geführt ist. Diese beiden Rechteckrohre weisen ein gewisses Spiel zueinander auf, was zu einer in der Draufsicht sichtbaren Verdrehung führen würde.

Eine derartige Verdrehung wird sodann von Führungsschienen verhindert. Die Bewegungen in andere Richtungen, z.B. Kippen nach vorne, hinten, innen oder außen, wird in diesem Fallen von den Rechteckrohren verhindert.

Die Hebeteller befinden sich vor Beginn eines Hebevorganges in der Höhe der Gleitfläche. Dadurch, daß sie in der Draufsicht in den Bereich der Gleitfläche ragen, greifen sie in ihrer normalen waagerechten Stellung unter einen Halmgutballen und heben ihn bei der Aufwärtsbewegung an. Die Schwenkbarkeit der Hebeteller ermöglicht es, daß diese bei einer Abwärtsbewegung an den Seiten eines in der Zwischenspeicherposition befindlichen Halmgutballens vorbeigleiten können. An dessen Unterseite klappen sie dann durch die Federvorspannung wieder in ihre waagerechte Lage und der Hebevorgang kann beginnen. Zur Unterstützung der Klappbewegung der Hebeteller sollten die Hebetraversen um einen solchen Betrag nach unten bewegbar sein, die ein Hebeteller im senkrechten Zustand benötigt, um unter die Gleitfläche in den waagerechten Zustand zu klappen.

Eine besonders zweckmäßige Ausgestaltung der Erfindung sieht vor, daß in dem oberen Teil der Säulen an deren Innenseite Klemmen angeordnet sind, von denen jeweils beiderseits der Gleitfläche gegenüberliegende Klemmen aufeinanderzu beweglich sind.

Dabei können die Klemmen als Klemmschienen so ausgeführt sein, daß sie an den Säulen parallelverlaufend angelenkt sind, wobei ein oberer und ein unterer Schwenkarm mit je einem Drehpunkt an der jeweiligen Säule und mit je einem zweiten Drehpunkt an der Klemmschiene angelenkt sind, und daß sie bei angehobenen Hebemitteln direkt oder über Umlenkhebel angehoben sind.

Wenn sich die Hebemittel in der angehobenen Position befinden, also in aller Regel einen Halmgutballen angehoben haben, drükken sie die Klemmschienen nach innen. Damit werden die Halmgutballen zwischen den gegenüberliegenden aufeinanderzubeweglichen Klemmen festgespannt, wodurch eine zusätzliche Sicherheit gegen ein Verrutschen der gestapelten Halmgutballen während der Fahrt gegeben wird.

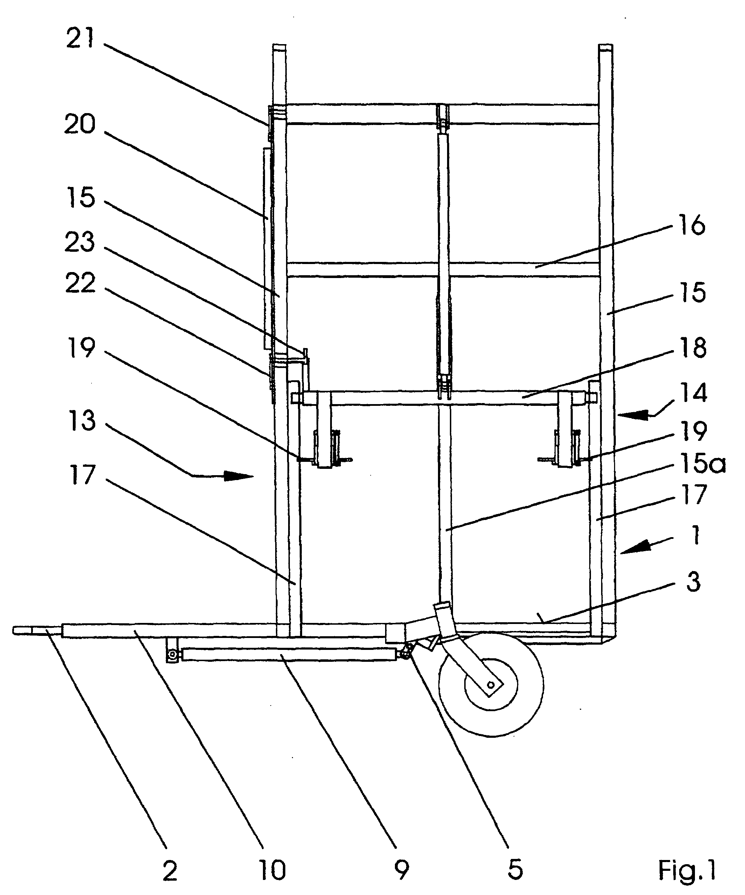

Die Erfindung soll nachfolgend anhand eines Ausführungsbeispieles näher erläutert werden. In den zugehörigen Zeichnung zeigt
- Fig. 1: eine Seitenansicht eines erfindungsgemäßen Ballenstapelwagens,

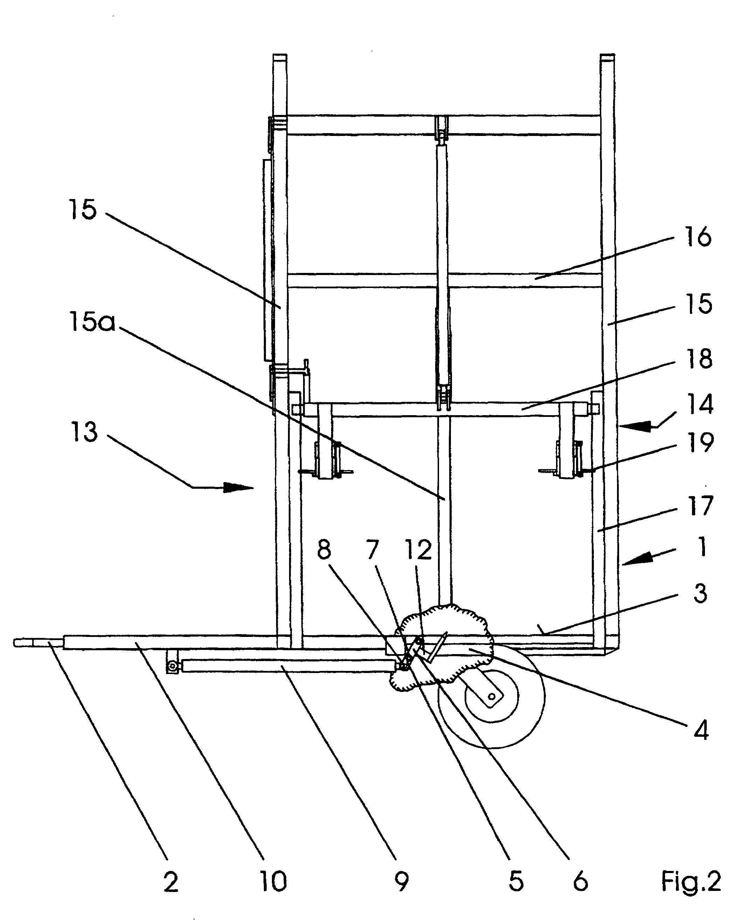

- Fig. 2: die Seitenansicht des Ballenstapelwagens mit einer Detaildarstellung eines Förderzinkens,

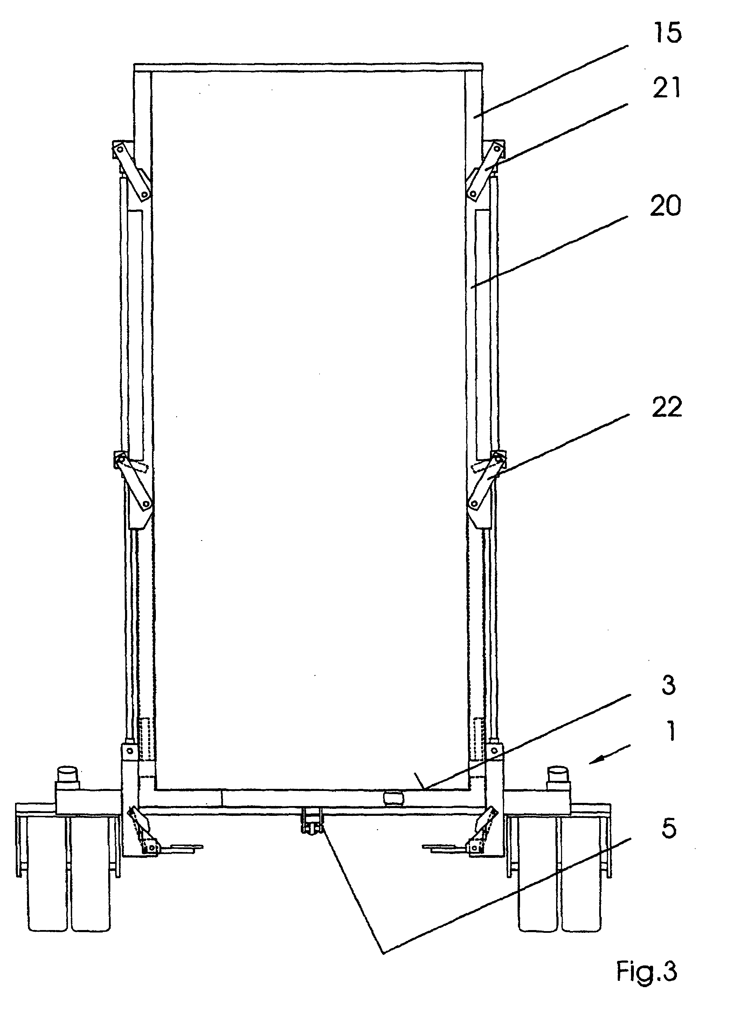

- Fig. 3: eine Rückansicht des Ballenstapelwagens,
- Fig. 4: eine Draufsicht auf den Ballenstapelwagen

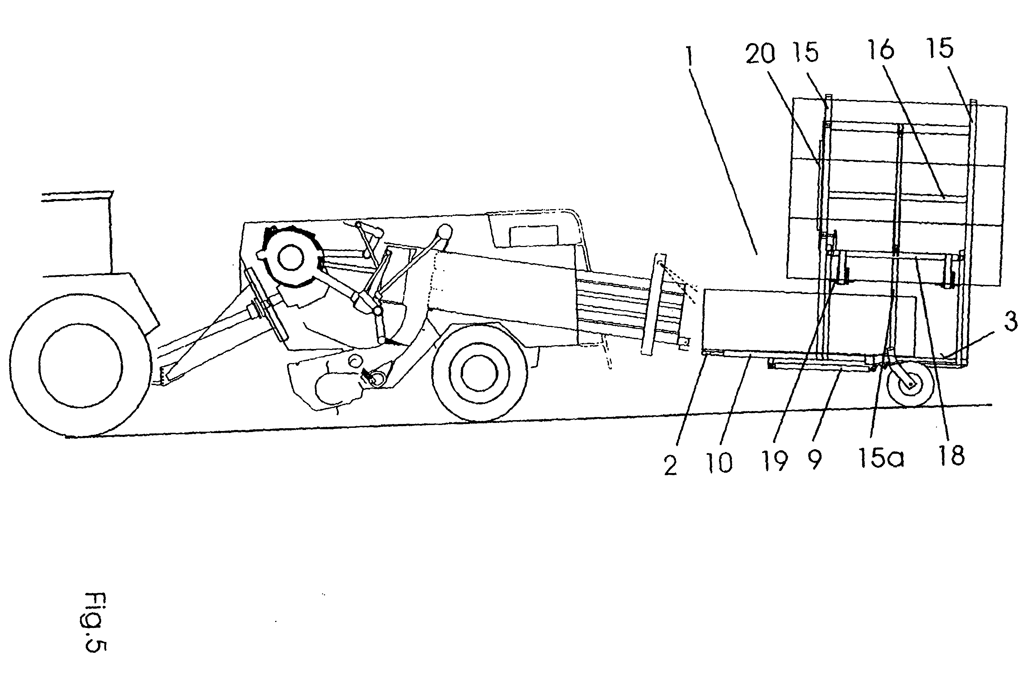

- Fig. 5: eine Gesamtdarstellung einer Strohballenpresse mit einem angeschlossenen Ballenstapelwagen,
- Fig. 6: eine Übersichtsdarstellung der Lage von Sensoren und

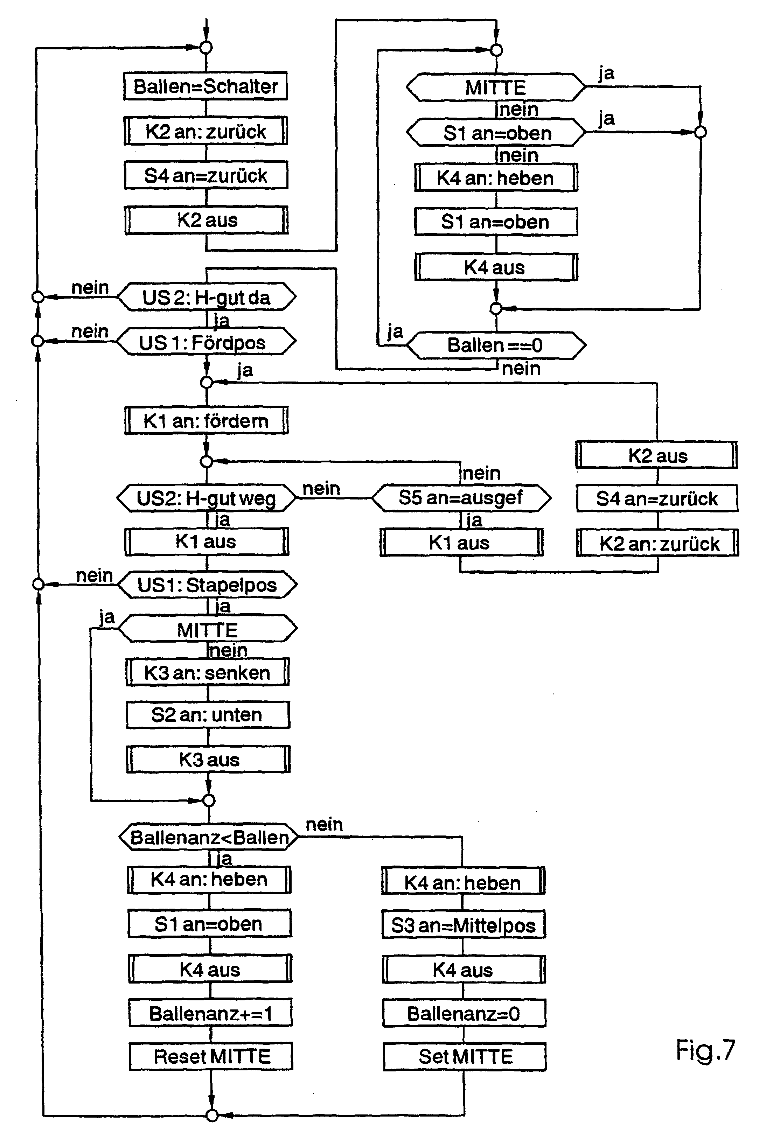

- Fig. 7: einen Ablaufplan des erfindungsgemäßen Verfahrens.

Wie in den Zeichnungen dargestellt, ist der Ballenstapelwagen 1 an der Zwischenspeicherpositon, d.h. unmittelbar am Ausgang des Preßkanals einer nicht näher dargestellten Strohballenpresse angeordnet. Er ist als Anhänger ausgeführt und wird über eine Anhängerkupplung 2 und eine nicht näher dargestellte Lenkstange an die Halmgutberge- oder Konservierungsmaschine, d.h. in diesem Falle an die Strohballenpresse angehängt. Der Strohballenstapelwagen 1 liegt mit seiner Gleitfläche 3 auf gleicher Höhe mit der Unterseite des Preßkanals.

Unter der Gleitfläche 3 ist eine Gleitschiene 4 angeordnet, die in Richtung des Ausstoßes von Strohballen verläuft. Auf dieser Gleitschiene 4 ist ein Zinkenschlitten 5 längsbeweglich angeordnet. Der Zinkenschlitten besteht aus zwei Schwenkhebeln 6, die einen Drehpunkt 7 aufweisen. Die Schwenkachse der Schwenkhebel 6 verläuft senkrecht zur Richtung der Längsbewegung des Förderzinkens 11. Dieser Drehpunkt 7 liegt einerseits in der Gleitschiene 4 und an dessen Stelle ist eine Rolle zur Bewegung in der Gleitschiene 4 vorgesehen. Andererseits liegt der Drehpunkt 7 so, daß der Schwenkhebel 6 einen einseitigen Hebel darstellt. An seinem Hebelende 8 ist ein hydraulischer Linearantrieb 9 angelenkt. Der Linearantrieb 9 stützt sich mit seinem anderen Ende auf der Zuggabel 10 des Ballenstapelwagens 1 ab.

Auf der dem Linearantrieb 9 gegenüberliegenden Seite des Schwenkhebels 6 ist der Förderzinken 11 über ein Distanzstück 12 befestigt. Damit weist der Förderzinken 11 einen Abstand zu dem Schwenkhebel 6 auf, so daß er eine Aufwärtsbewegung erfährt, wenn der Schwenkhebel 6 geschwenkt wird.

Wird nunmehr der Zinkenschlitten 5 bewegt, so schwenkt der Schwenkhebel 6 den Förderzinken 11 in den nicht näher dargestellten Strohballen und schiebt denselben auf der Gleitfläche 3 bis in die Zwischenspeicherposition.

Der Ballenstapelwagen 1 ist in der Nähe des Anfanges 13 und in der Nähe des Endes 14 der Zwischenspeicherposition beiderseits der Gleitfläche 3 mit nach oben gerichteten Säulen 15 versehen. Diese Säulen 15 sind auf je einer Seite mit Quertraversen 16 versehen. An den Säulen 15 sind Führungsschienen 17 vorgesehen, in denen parallel zu den Quertraversen 16 liegende Hebetraversen 18 senkrecht beweglich geführt werden. Die eigentliche senkrechte Führung wird von je einer Hauptführungssäule 15 a übernommen, die sie jeweils etwa in der Mitte zwischen zwei Säulen 15 befindet. Die Hauptführungssäule 15a ist als Rechteckrohr ausgebildet, auf dem ein zweites Rechteckrohr, an dem die Hebetraverse 18 befestigt ist, geführt wird.

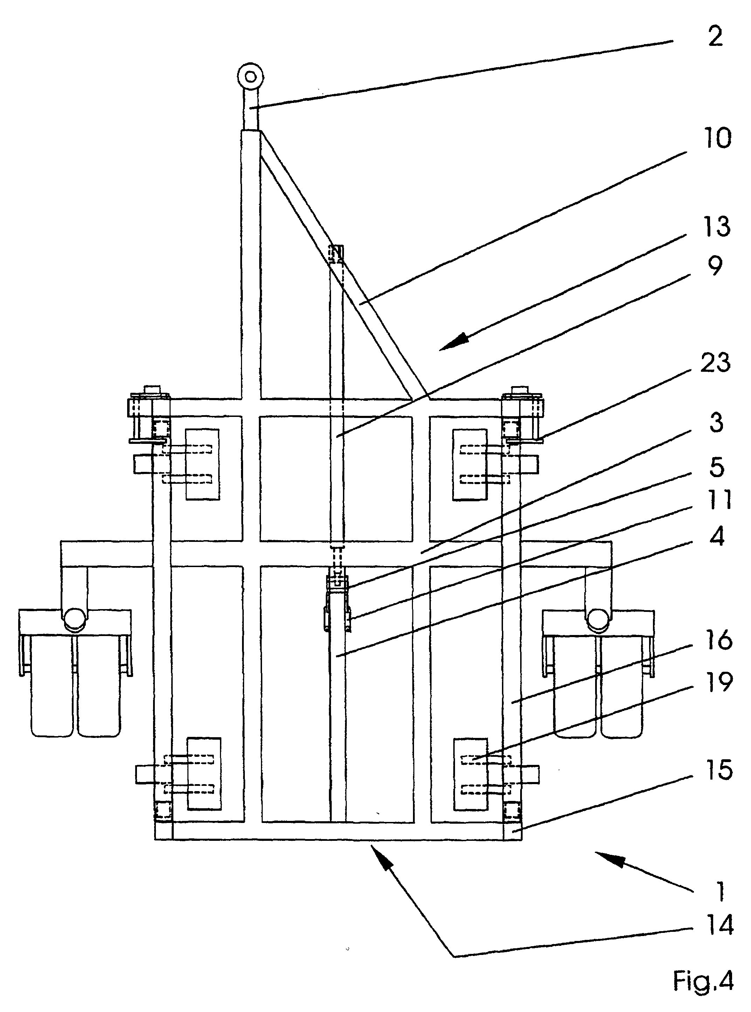

An den Hebetraversen 18 sind Hebeteller 19 angelenkt, die nach oben in eine senkrechte Stellung schwenkbar sind und in der dargestellten Art und Weise federbelastet in waagerechter Stellung gehalten werden. Wie in Fig. 4 deutlich sichtbar ist, ragen die Hebeteller 19 in den Bereich der Gleitfläche 3 hinein.

Die Hebeteller 19 sind nach oben von der Gleitfläche 3 bis in eine Höhe, die der Höhe eines Strohballens entspricht, und nach unten zur Ausführung einer Schwenkbewegung der Hebeteller 19 bewegbar.

Im oberen Teil der Säulen 15 sind Klemmschienen 20 angeordnet, die parallel zu den Säulen 15 liegen. Diese sind mit oberen Schwenkarmen 21 und mit unteren Schwenkarmen 22 an den Säulen 15 angelenkt. Ein Drehpunkt eines jeden Schwenkarmes 21 und 22 ist an der Säule und der andere an der Klemmschiene 20 angelenkt. Ist die Hebetraverse 18 in ihrer oberen Stellung, so hebt sie über den mit dem unteren Schwenkarm 22 fest verbundenen Umlenkhebel 23 auch die Klemmschienen 20 an, die infolge ihrer Aufhängung nach innen gehen und damit ein zwischen ihnen befindlichen Strohballen festklemmen. Damit ist während der Fahrt eine zusätzliche Sicherheit gegeben, daß die Strohballen nicht von den Hebetellern 19 oder vom unteren Ballen eines in der oberen Zwischenspeicherposition liegenden Strohballenstapels rutschen können.

Am Ende 14 der Zwischenspeicherposition ist ein erster Ultraschallsensor US1 angeordnet. Ein zweiter Ultraschallsensor US2 befindet sich am Anfang 13 der Zwischenspeicherposition. Weiterhin sind induktive Näherungsschalter vorgesehen und zwar S1 an der oberen Stellung der Hebetraversen 18, S2 an der unteren Stellung der Hebetraversen 18, S3 an einer Mittelposition der Hebetraversen 18, die eingenommen wird, wenn vier Strohballen gestapelt sind und abgesetzt werden, S4 in der eingefahrenen Position des Förderzinkens 11 und S5 in der ausgefahrenen Position des Förderzinkens 11.

Der erste Ultraschallsensor US1 lieferte ein analoges Signal. Sein Meßbereich beträgt 0,20 bis 1 m. Der Ultraschallsensor US2 liefert ein digitales Signal.

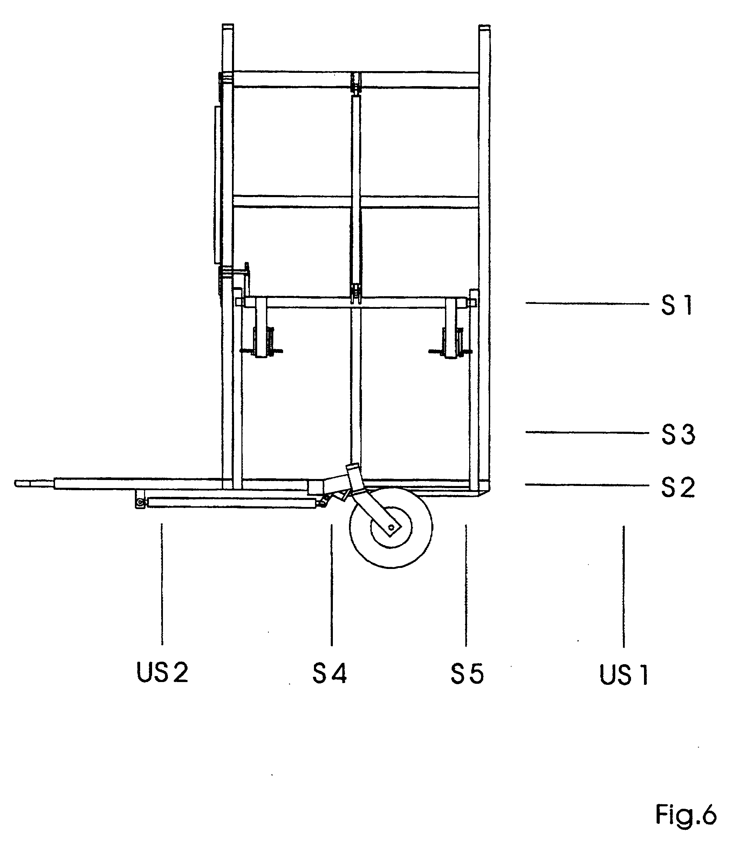

Wie aus Fig. 6 ersichtlich ist, wird ein Schiebevorgang eingeleitet, d.h. der Förderzinken 11 wird mit seiner Schubbewegung eingesetzt, wenn US2 ein EIN-Signal abgibt und US1 in einer Entfernung von ca. 1 m Stroh erkennt. Der Schiebevorgang wird solange fortgesetzt, bis US2 in den AUS-Zustand geht. In diesem Augenblick muß US2 in einem Toleranzbereich von 0,25 bis 0,55 m Stroh erkennen. Der zu stapelnde Ballen wird also durch US1 und US2 auf seine Länge überprüft. Ist diese in Ordnung, wird der Stapelvorgang eingeleitet.

Wenn die gewünschte zu stapelnde Ballenanzahl erreicht ist, werden die in der oberen Zwischenspeicherposition befindlichen Ballen auf dem unteren abgesetzt. Die Hebeteller müssen dazu ganz abgesenkt werden, bis sie vom senkrechten in den waagerechten Zustand klappen. Der gesamte Stapel kann dann abgesetzt werden; die Hebeteller müssen dabei in der unteren Position verbleiben. Da das Absetzen des Stapels einige Zeit in Anspruch nimmt, werden die waagerechten Hebeteller bis kurz unter die Gleitfläche (Position "Mitte") angehoben, um sie vor Beschädigungen durch Erdreich o.ä. zu schützen. Kommt nun der erste Ballen des neuen Stapels in die ordnungsgemäße Zwischenspeicherposition, muß nicht der gesamte Stapelzyklus, der aus "Senken" und "Heben" besteht, durchfahren werden, da die Hebeteller bereits unterhalb der Gleitfläche sind. Der "Set Mitte" unterbricht also einerseits den Hebevorgang beim letzten Ballen eines Stapels, damit der Stapel abgesetzt werden kann und verkürzt andererseits den Stapelvorgang des ersten Ballens. Des weiteren wird während der Fahrt ständig überprüft, ob sich die Hebetraversen mit den gestapelten Ballen in der oberen Position befinden. Durch Schwingungen des Wagens kommt es nämlich zu einer leichten Absenkung der Hebetraversen, bedingt durch Hydraulikzylinder, die diese antreiben. Sollten die Hebetraversen abgesunken sein, werden sie automatisch wieder angehoben. Dieses ist beim Absetzen des Stapels nicht erwünscht und wird ebenfalls durch den "Set Mitte" unterbunden.

Bei diesem Ausführungsbeispiel wird auch in nicht näher dargestellter Art und Weise ein Warnsignal erzeugt, wenn die Funktionen nicht innerhalb einer voreingestellten Zeit erfüllt werden. Wird, wie es sehr zweckmäßig sein wird, beispielsweise die Hydraulik des Schleppfahrzeuges für die Antriebe genutzt und fällt diese aus, kommt es zu derartigen Verzögerung, die dann durch das Warnsignal angezeigt werden.

Eine weitere Ausgestaltung besteht darin, daß in die Steuerung derart eingegriffen werden kann, daß der Schlepperfahrer mittels einer Fernbedienung gezielt Funktionen auslösen kann und über ein Informationsdisplay über den jeweiligen Verarbeitungszustand genaue Informationen erhält.

### Verfahren zur Ausgabe von Halmgutballen und Vorrichtung zur Durchführung des Verfahrens

### Bezugszeichenliste

- 1: Ballenstapelwagen
- 2: Anhängerkupplung
- 3: Gleitfläche
- 4: Gleitschiene
- 5: Zinkenschlitten
- 6: Schwenkhebel
- 7: Drehpunkt
- 8: Hebelende
- 9: Linearantrieb
- 10: Zuggabel
- 11: Förderzinken
- 12: Distanzstück
- 13: Anfang der Zwischenspeicherposition
- 14: Ende der Zwischenspeicherposition
- 15: Säule
- 15a: Hauptführungssäule
- 16: Quertraverse
- 17: Führungsschiene
- 18: Hebetraverse
- 19: Hebeteller
- 20: Klemmschiene
- 21: oberer Schwenkarm
- 22: unterer "
- 23: Umlenkhebel
- US1: erster Ultraschallsensor
- US2: zweiter Utraschallsensor
- S1: induktiver Näherungsschalter
- S2: "
- S3: "
- S4: "
- S5: "

## Patentansprüche

1. Verfahren zur Ausgabe von Halmgutballen, bei dem während einer Fahrt einer Halmgutberge- oder Konservierungsmaschine über ein Feld Halmgut, das bei der Verarbeitung anfällt, in Halmgutballen gepreßt wird, ein erster Halmgutballen ausgestoßen und vor dem Ablegen auf dem Feld in eine Zwischenspeicherposition geschoben wird, wobei sich die Zwischenspeicherposition mit gleicher Fahrt bewegt, der erste Halmgutballen in der Zwischenspeicherposition auf eine Höhe angehoben wird, die größer ist als die Höhe eines nachfolgenden zweiten Halmgutballens, der zweite Halmgutballen ausgestoßen und in die Zwischenspeicherposition gebracht wird, wobei während des Ausstoßens des zweiten Halmgutballens der erste Halmgutballen in seiner angehobenen Zwischenspeicherposition gehalten wird, nach Erreichen der Zwischenspeicherposition des zweiten Halmgutballens der erste Halmgutballen von seiner angehobenen Zwischenspeicherposition abgesenkt und auf den zweiten Halmgutballen nahezu deckungsgleich abgelegt wird und anschließend ein Halmgutballenstapel, bestehend aus dem zweiten Halmgutballen mit dem daraufliegenden ersten Halmgutballen, zur Ablage auf dem Feld aus der Zwischenspeicherposition ausgestoßen wird, **dadurch gekennzeichnet,**
**daß** bei Bewegung eines Halmgutballens in Richtung zu der Zwischenspeicherposition, die durch einen Anfang und ein Ende **gekennzeichnet ist**, welche einen Abstand zueinander aufweisen, der der normalen Länge eines Halmgutballens entspricht, ein Näherungssignal erzeugt wird, welches positionsspezifische Werte aufweist,
**daß** an dem Anfang der Zwischenspeicherposition ein Ballensignal erzeugt wird,
**daß** in dem Falle, daß das Näherungssignal einen ersten Wert aufweist, der einen großen Abstand des Ballenanfanges von dem Ende der Zwischenspeicherposition repräsentiert, und danach das Ballensignal einen EIN-Zustand zeigt, ein zusätzlicher Vorgang zum Schieben des Halmgutballens eingeleitet wird, der dann beendet wird, wenn das Näherungssignal einen zweiten Wert-aufweist und das Ballensignal in den AUS-Zustand geht, und
**daß** nach ordnungsgemäßer Beendigung des Schiebevorganges der Hebevorgang eingeleitet wird.

2. Verfahren nach Anspruch 1, **dadurch gekennzeichnet, daß** der Strohballenstapel aus mehr als zwei Halmgutballen dadurch gebildet wird, daß das Verfahren anstelle des ersten Halmgutballens mit dem Halmgutballenstapel wiederholt wird, wobei anstelle des zweiten Halmgutballens weitere Halmgutballen treten.

3. Verfahren nach Anspruch 1 oder 2, **dadurch gekennzeichnet, daß** die Anzahl der Halmgutballen, die gestapelt werden sollen, einstellbar ist.

4. Verfahren nach einem der Ansprüche 2 bis 3, **dadurch gekennzeichnet, daß** das Ausstoßen des Halmgutballenstapels in der Zwischenspeicherposition zur Ablage auf dem Feld durch eine weitere zusätzliche Schiebebewegung erfolgt.

5. Verfahren nach einem der Ansprüche 1 bis 4, **dadurch gekennzeichnet, daß** bei einem EIN-Zustand des ersten und des zweiten Näherungssignales der Vorgang zum Schieben des Halmgutballens durchgeführt wird, bis das zweite Näherungssignal den AUS-Zustand einnimmt.

6. Verfahren nach einem der Ansprüche 1 bis 5, **dadurch gekennzeichnet, daß** ein der Größe des Halmgutballenstapels entsprechendes Endsignal erzeugt wird und daß im Falle des EIN-Zustandes des Endsignales ein weiterer Hebevorgang gesperrt wird, bis der Halmgutballenstapel aus der Zwischenspeicherposition entfernt wird.

7. Vorrichtung zur Ausgabe von Halmgutballen mit einer fahrbaren Halmgutberge- oder Konservierungsmaschine, die an ihrer Ausgabeseite einen die gepreßten Halmgutballen ausstoßenden Preßkanal aufweist, hinter dem ein Halmgutballenstapelwagen an einer Zwischenspeicherposition vorgesehen ist, der im wesentlichen auf gleicher Höhe mit der Unterseite des Preßkanales eine Gleitfläche aufweist, in deren Bereich unter den Halmgutballen greifende Hebemittel vorgesehen sind, **dadurch gekennzeichnet, daß** die Hebemittel im wesentlichen senkrecht bewegbar sind,
daß eine Schubvorrichtung für Halmgutballen vorgesehen ist, und
daß den Anfang und das Ende der Zwischenspeicherposition kennzeichnende Sensoren angeordnet sind, die mit einer Steuereinrichtung zur Steuerung der Hebemittel und der Schubvorrichtung in Wirkungsverbindung stehen.

8. Vorrichtung nach Anspruch 7, **dadurch gekennzeichnet, daß** die Schubvorrichtung unter der Gleitfläche angeordnet ist und einen bis über die Höhe der Gleitfläche nach oben schwenkbaren Förderzinken aufweist, der in Ausstoßrichtung längsbeweglich ist.

9. Vorrichtung nach Anspruch 8, **dadurch gekennzeichnet,**
**daß** eine in Ausstoßrichtung verlaufende Gleitschiene vorgesehen ist, auf der ein Zinkenschlitten längsbeweglich ist,
**daß** ein Schwenkhebel über ein Gelenk an dem Zinkenschlitten schwenkbar angeordnet ist, wobei die Schwenkachse
senkrecht zur Richtung der Längsbewegung des Förderzinkens verläuft,
**daß** der Förderzinken über ein Distanzstück mit einem Abstand zu dem Schwenkhebel an der in Richtung der Längsbewegung hinteren Seite des Schwenkhebels befestigt ist und
**daß** an einem Ende eines Hebelarmes des Schwenkhebels ein in Richtung der Längsbewegung des Förderzinkens längsbeweglicher Linearantrieb angelenkt ist.

10. Vorrichtung nach Anspruch 9, **dadurch gekennzeichnet, daß** der Zinkenschlitten mindestens einen in der Gleitschiene eingreifenden Führungsstift aufweist und der Zinkenschlitten aus mindestens einem Schwenkhebel besteht, wobei der Führungsstift das Gelenk des Schwenkhebels derart darstellt, daß die Schwenkachse mit der Mittelachse des Führungsstiftes zusammenfällt.

11. Vorrichtung nach Anspruch 9 oder 10, **dadurch gekennzeichnet, daß** der Linearantrieb aus einer hydraulischen Druck- und Zugvorrichtung besteht, die in Richtung zur Ballenpresse widergelagert ist.

12. Vorrichtung nach einem der Ansprüche 7 bis 11, **dadurch gekennzeichnet, daß** der Ballenstapelwagen eine Zugöse zur Verbindung mit der Halmgutsammel- oder konservierungsmaschine aufweist und derart zweirädrig ausgebildet ist, daß die Räder in Radgabeln geführt, die beiderseits der Gleitfläche angeglenkt und drehbar gelagert und arretierbar sind, daß sich die Zugöse in einem Abstand zu einer gedachten Mittellängslinie des Ballenstapelwagens befindet und daß in dem gleichen Abstand zu dieser Mittellängslinie auf deren anderen Seite eine abnehmbare Lenkstange zur weiteren Verbindung des Ballenstapelwagens mit der Halmgutberge- oder konservierungsmaschine befestigbar ist.

13. Vorrichtung nach einem der Ansprüche 7 bis 12 **dadurch gekennzeichnet,**
**daß** der Ballenstapelwagen am Anfang und am Ende der Zwischenspeicherposition beiderseits der Gleitfläche nach oben gerichtete Säulen aufweist, wobei die Säulen auf je einer Seite über Quertraversen miteinander verbunden sind,
**daß** das Hebemittel derart ausgebildet ist, daß zwischen den Säulen je eine Hauptführungssäule angeordnet ist, in denen beiderseits der Gleitfläche längsverlaufende Hebetraversen senkrecht beweglich geführt sind, und daß an den Säulen Führungsschienen zur seitlichen Führung der Hebetraverse vorgesehen sind,
**daß** an den Hebetraversen Hebeteller angeordnet sind, die nach oben in eine senkrechte Stellung schwenkbar sind und federbelastet in waagerechter Stellung gehalten werden und die in der Draufsicht in die Gleitfläche im Bereich der Zwischenspeicherposition ragen und
**daß** die Hebeteller zumindest von der Höhe der Gleitfläche bis zu einer Höhe die größer als die Höhe der Halmgutballen ist, und unter die Gleitfläche bewegbar sind.

14. Vorrichtung nach Anspruch 13, **dadurch gekennzeichnet, daß** in dem oberen Teil der Säulen an der Innenseite der Säulen Klemmen angeordnet sind, von denen jeweils beiderseits der Gleitfläche gegenüberliegende Klemmen aufeinanderzu beweglich sind.

15. Vorrichtung nach Anspruch 14, **dadurch gekennzeichnet,**
**daß** die Klemmen als Klemmschienen ausgeführt sind, die an den Säulen parallelverlaufend angelenkt sind, wobei ein oberer und ein unterer Schwenkarm mit je einem Drehpunkt an der jeweiligen Säule und mit je einem zweiten Drehpunkt an der Klemmschiene angelenkt sind, und
**daß** die Klemmschienen bei angehobenen Hebemitteln direkt oder über Umlenkhebel angehoben sind.

## Claims

1. Process for producing straw bales in which, while a straw packing or conserving machine is travelling over a field, straw produced during processing is pressed into bales, where a first straw bale is ejected and, prior to being deposited on the field, pushed into an intermediate storage position, this intermediate storage position moving at the same speed, where the first straw bale in the intermediate storage position is lifted to a height that is greater than the height of a subsequent, second straw bale, the second straw bale is ejected and deposited in the intermediate storage position and, during ejection of the second straw bale, the first straw bale is held in its raised intermediate storage position, and where, after reaching the intermediate storage position of the second straw bale, the first straw bale is lowered from its raised intermediate storage position and deposited nearly exactly on the second straw bale and, subsequently, a stack of straw bales, consisting of the second straw bale with the first straw bale on top of it, is ejected from the intermediate storage position for depositing on the field, **characterised in that**, during movement of a straw bale towards the intermediate storage position, which is **characterised by** a beginning and an end that are separated by a distance corresponding to the standard length of a straw bale, a proximity signal is triggered that has position-specific values,
in that a bale signal is triggered at the beginning of the intermediate storage position,
in that, if the proximity signal has a first value indicating a large distance of the beginning of the bale from the end of the intermediate storage position, and the bale signal then displays the ON state, an additional process for pushing the straw bale is initiated, which is terminated when the proximity signal displays a second value and the bale signal switches to the OFF state, and
in that proper conclusion of the pushing process is followed by initiation of the lifting process.

2. Process as per Claim 1, **characterised in that** the straw bale stack consisting of more than two straw bales is formed by the process being repeated not with the first straw bale, but with the straw bale stack, where additional straw bales take the place of the second straw bale.

3. Process as per Claim 1 or 2, **characterised in that** the number of straw bales to be stacked is variable.

4. Process as per one of Claims 2 to 3, **characterised in that** the ejection of the straw bale stack in the intermediate storage position for depositing on the field is achieved by means of an additional pushing motion.

5. Process as per one of Claims 1 to 4, **characterised in that**, when the first and second proximity signals display an ON state, the process for pushing the straw bale is carried out until the second proximity signal switches to the OFF state.

6. Process as per one of Claims 1 to 5, **characterised in that** an end signal corresponding to the size of the straw bale stack is generated, and **in that**, if the end signal is in the ON state, a further lifting process is blocked until the straw bale stack is removed from the intermediate storage position.

7. Device for producing straw bales with a mobile straw packing or conserving machine, which has a pressing channelon its discharge side for ejecting the pressed straw bales, behind which a straw bale stacking wagon is provided at an intermediate storage position, which has a sliding surface essentially at the same height as the bottom side of the pressing channel, in the region of which lifting devices are provided that reach under the straw bale, **characterised in that** the lifting devices move in an essentially vertical direction,
**in that** a pushing device for straw bales is provided, and
**in that** sensors marking the beginning and end of the intermediate storage position are provided, which are connected to a control unit to control the lifting devices and the pushing device.

8. Device as per Claim 7, **characterised in that** the pushing device is located underneath the sliding surface and displays a handling prong that can pivot upwards above the height of the sliding surface and move longitudinally in the direction of ejection.

9. Device as per Claim 8, **characterised**
**in that** a slide rail running in the direction of ejection is provided, on which a prong carriage can move in the longitudinal direction,
**in that** a pivoting lever is mounted on the prong carriage in swivelling fashion via a joint, where the pivot axis is perpendicular to the direction of the longitudinal movement of the handling prong,
**in that** the handling prong is mounted via a spacer at a distance from the pivoting lever on the rear side of the pivoting lever relative to the direction of longitudinal movement, and
**in that** a linear drive, which can move longitudinally in the direction of the longitudinal movement of the handling prong, is hinge-mounted on one end of a lever arm of the pivoting lever.

10. Device as per Claim 9, **characterised in that** the prong carriage has at least one guide pin engaging the slide rail and the prong carriage consists of at least one pivoting lever, where the guide pin represents the joint of the pivoting lever such that the pivot axis coincides with the centre axis of the guide pin.

11. Device as per Claim 9 or 10, **characterised in that** the linear drive consists of a hydraulic compression and tension device with an abutment in the direction of the bale press.

12. Device as per one of Claims 7 to 11, **characterised in that** the bale stacking wagon has a drawbar eye for connection to the straw bale packing or conserving machine and is of a two-wheel design such that the wheels are guided in wheel forks which are hinge-mounted, pivot-mounted and lockable on both sides of the sliding surface, **in that** the drawbar eye is located at a distance from an imaginary centre line of the bale stacking wagon, and **in that** a detachable steering tie rod for the further connection of the bale stacking wagon to the straw bale packing or conserving machine can be mounted at the same distance from this centre line on the other side.

13. Device as per one of Claims 7 to 12, **characterised**
**in that** the bale stacking wagon has upright columns at the beginning and end of the intermediate storage position on both sides of the sliding surface, where the columns on each side are connected to one another by cross-members,
**in that** the lifting device is designed such that a main guide column is located between the columns, in which longitudinal lifting cross-members are guided in vertically mobile fashion on both sides of the sliding surface, and in that guide rails are provided on the columns for the lateral guidance of the lifting cross-members,
**in that** lifting plates are arranged on the lifting cross-members, which can pivot upwards into a vertical position, are held in horizontal position by spring force, and, in the top view, project into the sliding surface in the region of the intermediate storage position, and
**in that** the lifting plates can move at least from the height of the sliding surface up to a height that is greater than the height of the straw bales, and under the sliding surface.

14. Device as per Claim 13, **characterised in that** clamps are provided in the upper region of the columns on the inside of the columns, where clamps opposite one another on both sides of the sliding surface can move towards one another.

15. Device as per Claim 14, **characterised**
**in that** the clamps are designed as clamping rails, which are hinge-mounted parallel to the columns, where an upper and a lower pivoting arm are hinge-mounted, each having a point of rotation on the respective column and a second point of rotation on the clamping rail, and
**in that** the clamping rails are raised directly, or via a reversing lever, when the lifting devices are raised.

## Revendications

1. Procédé pour distribution de balles de paille dans lequel pendant le trajet d'une machine de ramassage ou de conservation de paille sur le terrain, la paille produite est compressée en balles, une première balle de paille est éjectée et est mise dans une position de stockage intermédiaire avant d'être déposée sur le terrain, la position de stockage intermédiaire se déplaçant dans le même trajet, la première balle de paille se trouvant en position de stockage intermédiaire est élevée à une hauteur qui est supérieure à la hauteur d'une seconde balle de paille suivante, la seconde balle de paille est amenée en position de stockage intermédiaire, la première balle de paille restant dans sa position de stockage intermédiaire haute tandis que la seconde balle de paille est éjectée, et après que la seconde balle de paille a atteint sa position de stockage intermédiaire, la première balle de paille est abaissée depuis sa position supérieure de stockage intermédiaire et est déposée presqu'à recouvrement sur la seconde balle de paille et ensuite une pile de balle de paille se composant de la seconde balle reposant sur la première balle est éjectée à partir de la position de stockage intermédiaire pour être déposée sur le terrain, **caractérisé par le fait,**
**que** lors du mouvement d'une balle de paille en direction de la position de stockage intermédiaire qui est repérée par un début et une fin présentant entre eux un écart qui correspond à la longueur normale d'une balle de paille, un signal de proximité présentant des valeurs spécifiques du positionnement est généré,
**qu'**au début de la position de stockage intermédiaire un signal de balle est généré,
**que** dans le cas où le signal de proximité présente une première valeur qui représente une grande distance du début de balle par rapport à la fin de la position de stockage intermédiaire et où ensuite le signal de balle donne un état MARCHE, une opération supplémentaire de poussée de la balle de paille est initiée, laquelle opération est terminée lorsque le signal de proximité présente une seconde valeur et le signal de balle passe à l'état ARRÊT, et
**qu'**après la fin correcte de l'opération de poussée, l'opération de levage est initiée.

2. Procédé suivant revendication 1, **caractérisé par le fait que** la pile de balles de paille est formée de plus de deux balles en ce que le processus est répété avec la pile de balles de paille au lieu de la première balle de paille, d'autres balles de paille intervenant à la place de la seconde balle de paille.

3. Procédé suivant revendication 1 ou 2, **caractérisé par le fait que** le nombre de balles de paille devant être empilées est réglable.

4. Procédé suivant l'une des revendications 2 à 3, **caractérisé par le fait que** l'éjection de la pile de balles de paille dans la position de stockage intermédiaire pour dépôt sur le terrain est effectuée au moyen d'un autre mouvement supplémentaire de poussée.

5. Procédé suivant l'une des revendications 1 à 4, **caractérisé par le fait que** l'opération de poussée de la balle de paille est exécutée en cas d'état MARCHE du premier et du second signal de proximité jusqu'à ce que le second signal de proximité adopte l'état ARRÊT.

6. Procédé suivant l'une des revendications 1 à 5 **caractérisé par le fait qu'**un signal correspondant à la grandeur de la pile de balles de paille est généré et que dans le cas de l'état MARCHE du signal de fin une nouvelle opération de levage est interdite jusqu'à ce que la pile de balles de paille soit éloignée de la position de stockage intermédiaire.

7. Dispositif pour distribution de balles de paille avec une machine mobile de ramassage ou de conservation de paille présentant sur sa sortie un canal de poussée éjectant les balles de paille pressées et à l'arrière duquel un chariot d'empilage de balles de paille est prévu qui présente en substance à même hauteur que le côté inférieure du canal de poussée une surface de glissement dans la zone de laquelle des moyens de levage préhenseurs sont prévus sous les balles de paille, **caractérisé par le fait que** les moyens de levage sont en substance déplaçables verticalement,
qu'un dispositif de poussée est prévu pour les balles de paille, et
que des capteurs repérant le début et la fin de la position de stockage intermédiaire et qui se trouvent en liaison active avec un équipement de commande pour actionnement des moyens de levage et du dispositif de poussée, sont prévus.

8. Dispositif suivant revendication 7, **caractérisé par le fait que** le dispositif de poussée est implanté en dessous de la surface de glissement et présente une fourche d'entraînement pivotant vers le haut en dépassement du niveau de la surface de glissement et qui est mobile longitudinalement en direction de l'éjection.

9. Dispositif suivant revendication 8, **caractérisé par le fait**
**qu'**un rail de glissement s'étendant en direction de l'éjection et sur lequel un chariot à fourche se déplace longitudinalement est prévu,
**qu'**un levier de pivotement est monté pivotant par une articulation sur le chariot à fourche, l'axe de pivotement étant orienté perpendiculairement au mouvement longitudinal de la fourche d'entraînement,
**que** la fourche d'entraînement est fixée au moyen d'une pièce intermédiaire à distance du levier de pivotement et sur la face arrière du levier de pivotement en direction du mouvement longitudinal et
**qu'**à une extrémité d'un bras du levier de pivotement un entraînement linéaire mobile longitudinalement en direction du mouvement longitudinal de la fourche d'entraînement, est articulé.

10. Dispositif suivant revendication 9, **caractérisé par le fait que** le chariot à fourche présente au moins un doigt de guidage s'engageant dans le rail de glissement et que le chariot à fourche est constitué d'au moins un levier de pivotement, le doigt de guidage formant l'articulation du levier de pivotement de manière telle que l'axe de pivotement soit confondu avec l'axe du doigt de guidage.

11. Dispositif suivant revendication 9 ou 10, **caractérisé par le fait que** l'entraînement linéaire consiste en un système hydraulique de poussée et traction qui est arrêté en direction de la presse à balles.

12. Dispositif suivant l'une des revendications 7 à 11, **caractérisé par le fait que** le chariot d'empilage des balles présente un anneau de couplage pour la liaison avec la machine de ramassage ou de conservation de la paille et comporte deux roues de manière à ce que les roues soit guidées dans des fourches qui sont articulées des deux côtés de la surface de guidage, sont tournantes et peuvent être bloquées, que l'anneau de couplage est décalé par rapport à l'axe médian du chariot d'empilage des balles et que à la même distance de cet axe médian sur son autre côté une barre directrice amovible pour autre liaison du chariot d'empilage de balles avec la machine de ramassage ou de conservation de la paille peut être fixée.

13. Dispositif suivant l'une des revendications 7 à 12, **caractérisé par le fait**
**que** le chariot d'empilage des balles présente au début et à la fin de la position de stockage intermédiaire de chaque côté de la surface de glissement, des colonnes orientées vers le haut, ces colonnes étant reliées ensemble de chaque côté par des traverses,
**que** le moyen de levage est constitué de manière telle qu'entre chacune des colonnes respectivement une colonne principale est implantée et dans laquelle de chaque côté de la surface de glissement des traverses de levage orientées longitudinalement et mobiles verticalement sont guidées, et que des rails de guidage sont prévus sur les colonnes pour le guidage latéral des traverses de levage sont prévus
**que** des plateaux de levage qui sont pivotants vers le haut en une position verticale et maintenus par ressort en position horizontale sont montés sur les traverses de levage et penètrent en vue de dessus dans la surface de glissement dans la zone de position de stockage intermédiaire et
**que** les plateaux de levage sont déplaçables au minimum depuis le niveau de la surface de glissement jusqu'à un niveau supérieur à la hauteur des balles de paille et en dessous de la surface de glissement.

14. Dispositif suivant revendication 13, **caractérisé par le fait qu'**en partie haute des colonnes sur le côté intérieur des colonnes des serrages sont incorporés qui peuvent se rapprocher à partir de chacun des deux côtés de la surface de glissement.

15. Dispositif suivant la revendication 14, **caractérisé par le fait**
**que** les serrages sont réalisées sous forme de profils de serrage qui sont articulés sur les colonnes parallèlement aux colonnes un bras pivotant supérieur et un bras pivotant inférieur étant articulés chacun avec un axe de rotation sur la colonne respective et un deuxième axe de rotation sur le profil de serrage, et
**que** les profils de serrage sont relevés directement ou par des leviers de renvoi quand les moyens de levage sont relevés.
